# EUROPEAN PATENT APPLICATION

(11) **EP 4 753 066 A1**
(43) Date of publication of application: **03.06.2026**
(21) Application number: 25779330.7
(22) Date of filing: 11.03.2025
(51) Int. Cl.: H01M 50/54, H01M 50/536, H01M 50/547, H01M 50/586, H01M 50/593, H01M 50/166, H01M 50/507, H01M 50/244, H01M 4/04

(54) **BATTERY CELL AND METHOD FOR MANUFACTURING BATTERY CELL**

(30) Priority: 28.03.2024 KR 20240042526; 06.01.2025 KR 20250001422
(71) Applicant: LG Energy Solution, Ltd., Seoul 07335 (KR)
(72) Inventor: KIM, Wan Ju, Daejeon 34122 (KR); KIM, Soo Young, Daejeon 34122 (KR)
(74) Representative: Goddar, Heinz J.
(86) International application number: PCT/KR2025/003153
(87) International publication number: WO 2025/206620

(57) **Abstract**

Disclosed herein relates to a battery cell. The battery cell includes: a first case including a base plate; a plurality of stack cells on the base plate, each of the plurality of stack cells including a positive electrode, a negative electrode, and a separator interposed between the positive electrode and the negative electrode; a plurality of first tab collectors on the base plate; and a plurality of second tab collectors on the base plate, wherein the first tab collectors includes first fastening holes, and the first case includes first dents that partially fills the first fastening holes.

## Description

### [Technical Field]

The present disclosure relates to a battery cell and a battery cell manufacturing method. This application claims the benefit of Korean Patent Application No. 10-2024-0042526, filed on March 28, 2024, and Korean Patent Application No. 10-2024-0001422, filed on January 6, 2025, the disclosures of which are incorporated herein by reference.

### [Background]

Unlike primary batteries, secondary batteries can be charged and discharged a plurality of times. Secondary batteries are widely used as an energy source for a variety of wireless devices, including handsets, laptops, and cordless vacuum cleaners. In recent years, as the manufacturing cost of electric hybrid electric vehicles (HEVs) and battery electric vehicles (BEVs) has decreased dramatically due to improved energy density and economies of scale, and as the range of BEVs has increased to match that of fueled vehicles, the primary use of secondary batteries has shifted from mobile devices to mobility.

Secondary batteries are categorized into lithium-ion batteries, lithium-ion polymer batteries, and lithium polymer batteries based on the composition of the electrodes and electrolyte. Lithium-ion polymer batteries are gaining share in secondary batteries due to their ease of manufacturing and low potential for leakage of electrolyte.

### [Summary]

### [Technical Problem]

The problem addressed by the technical ideas of the present disclosure is to provide a battery cell and a method of manufacturing a battery cell.

### [Technical Solution]

According to exemplary embodiments of the present disclosure to address the above challenges, a battery cell is provided. The battery cell includes: a first case including a base plate; a plurality of stack cells on the base plate, each of the plurality of stack cells including a positive electrode, a negative electrode, and a separator interposed between the positive electrode and the negative electrode; a plurality of first tab collectors on the base plate; and a plurality of second tab collectors on the base plate, wherein the first tab collectors includes first fastening holes.

The first tab collectors are spaced apart from the second tab collectors in a first direction.

Each of the first tab collectors and each of the second tab collectors extend in a second direction perpendicular to the first direction.

Each of the first tab collectors includes first fastening holes.

The first fastening holes are at the ends of the second direction of the first tab collectors.

The first case partially fills the first fastening holes.

The first case includes first dents that partially fill the first fastening holes, and the first dents are arranged along a third direction perpendicular to the first and second directions.

The first tab collectors are arranged along the third direction, and the second tab collectors are arranged along the third direction.

Each of the second tab collectors includes second fastening holes, and the first case partially fills the second fastening holes.

The positive electrode of each of the plurality of stack cells includes a positive electrode coating part and a positive electrode tab connected to the positive electrode coating part, wherein the negative electrode of each of the plurality of stack cells includes a negative electrode coating part and a negative electrode tab connected to the negative electrode coating part, and the positive electrode tab of each of the plurality of stack cells is spaced in a first direction from the negative electrode tab of each of the plurality of stack cells.

A width of a second direction perpendicular to the first direction of the positive electrode coating part is equal to a width of the second direction of the positive electrode tab.

A width in the second direction of the negative electrode coating part is equal to a width in the second direction of the negative electrode tab.

The battery cell further includes a second case coupled to the first case, and the second case includes a positive electrode terminal shorted with the plurality of first tab collectors and a negative electrode terminal shorted with the plurality of second tab collectors.

A positive electrode tab of the positive electrode of each of those corresponding among the plurality of stack cells is interposed between the first tab collectors, and a negative electrode tab of the negative electrode of each of those corresponding among the plurality of stack cells is interposed between the second tab collectors.

According to exemplary embodiments, a battery cell is provided. The battery cell includes: a first case including a base plate; a plurality of stack cells on the base plate, each of the plurality of stack cells including a positive electrode, a negative electrode, and a separator interposed between the positive electrode and the negative electrode; a plurality of first tab collectors on the base plate; and a plurality of second tab collectors on the base plate, wherein the positive electrode of each of the plurality of stack cells comprises a positive electrode coating part and a positive electrode tab connected to the positive electrode coating part, the negative electrode of each of the plurality of stack cells includes a negative electrode coating part and a negative electrode tab connected to the negative electrode coating part, wherein the positive electrode tab of each of the plurality of stack cells are spaced apart in a first direction from the negative electrode tab of each of the plurality of stack cells, and a width of a second direction perpendicular to the first direction of the positive electrode coating part is equal to a width of the second direction of the positive electrode tab.

A width in the second direction of the negative electrode coating part is equal to a width in the second direction of the negative electrode tab.

### [Advantageous Effects]

According to exemplary embodiments of the present disclosure, a battery cell including a large number of electrodes can be provided, thereby increasing the energy density of the battery cell. Furthermore, despite the fact that the battery cell includes a large number of electrodes, deterioration of the electrical properties of the battery cell may be prevented by injecting the electrolyte a plurality times during the stacking process of the electrodes. Further, the production cost of the battery cell may be reduced, and the throughput may be increased, wherein the tab collectors are coupled to the first case by mechanical tooling.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 is a flowchart to illustrate a method of manufacturing a battery cell according to exemplary embodiments.
FIG. 2 is a flowchart to illustrate a method of manufacturing a battery cell according to exemplary embodiments.
FIG. 3 is a perspective view of a stack cell.
FIG. 4 is an exploded perspective view of a stack cell.
FIGS. 5 through 7 show the stacking of a stack-collector module.
FIG. 8 shows the fixation of the first tab collector and second tab collector to the first case.
FIG. 9 shows a portion of FIG. 8.
FIG. 10 shows the electrolyte injection process.
FIG. 11 is a perspective view of a battery cell.
FIGS. 12 and 13 are partial perspective views of a battery cell.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

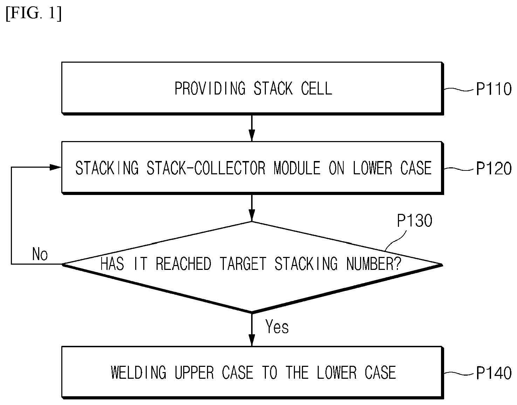

FIG. 1 is a flowchart to illustrate a method of manufacturing a battery cell according to exemplary embodiments.

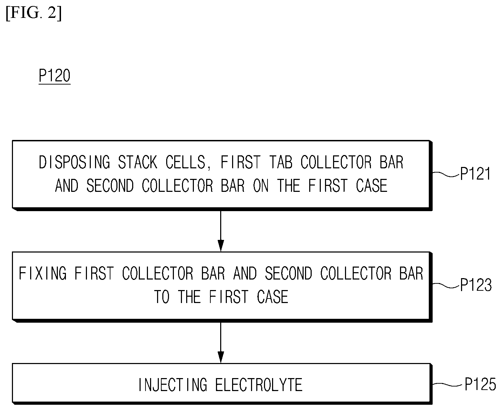

FIG. 2 is a flowchart to illustrate a method of manufacturing a battery cell according to exemplary embodiments. More specifically, FIG. 2 illustrates P120 of FIG. 1.

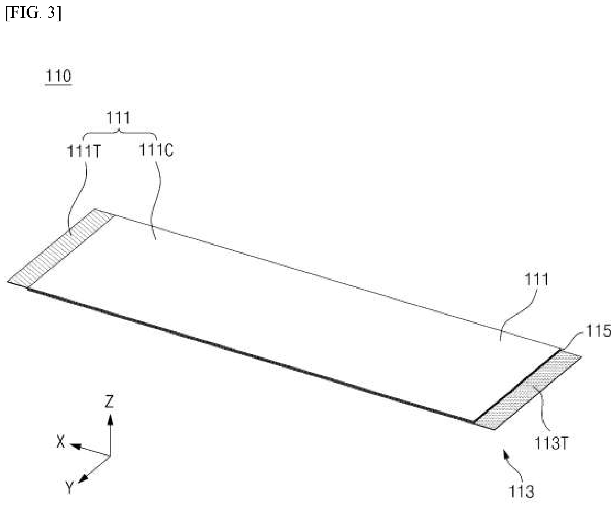

FIG. 3 is a perspective view of the stack cell 110.

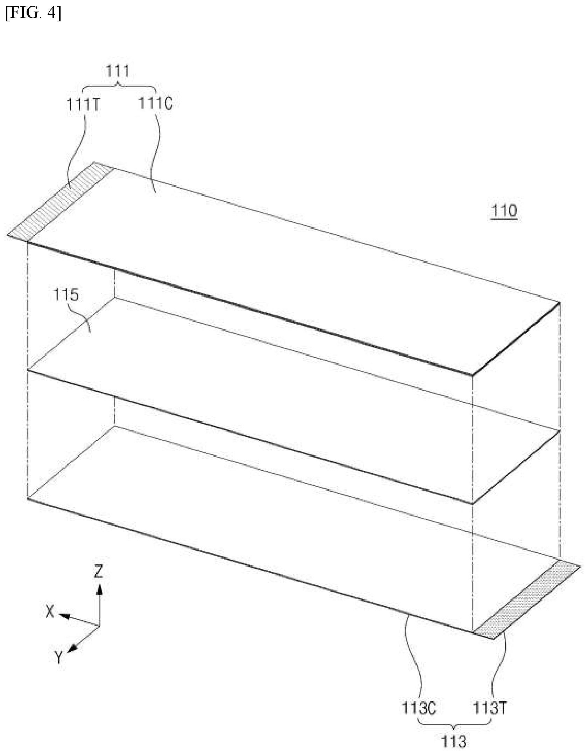

FIG. 4 is an exploded perspective view of the stack cell 110.

Referring to FIGS. 1, 3, and 4, at P110, a stack cell 110 may be provided. The stack cell 110 may be provided via a lamination process. The stack cell 110 may include a positive electrode 111, a negative electrode 113, and a separator 115.

The technical ideas of the present disclosure are described below with reference to an example wherein the stack cell 110 is a mono-cell including one positive electrode 111, one negative electrode 113 and a separator 115 between them, but this is for illustrative purposes only and does not in any sense limit the technical ideas of the present disclosure. Based on what is described herein, one of ordinary skill in the art will readily arrive at embodiments in which the stack cell includes one or more positive electrodes, one or more negative electrodes, and one or more separators to prevent short circuits between the positive electrodes and negative electrodes.

The positive electrode 111 may include a positive electrode coating part 111C and a positive electrode tab 111T. The positive electrode tab 111T may be connected to the positive electrode coating part 111C. The positive electrode 111 may include a positive electrode current collector and a positive electrode active material layer including a positive electrode active material. The positive electrode active material layer may be partially applied to the positive electrode current collector. The positive electrode tab 111T may be an exposed portion of the positive electrode current collector that is not covered by the positive electrode active material layer. The positive electrode coating part 111C may be a portion of the positive electrode that includes a positive electrode current collector and a positive electrode active material layer coated on the positive electrode current collector.

The thickness of the positive electrode current collector may be in the range from about 3 µm to about 500 µm. The positive electrode current collector may have a high conductivity and may not cause chemical changes in the final manufactured secondary battery. The positive electrode current collector may include, for example, stainless steel, aluminum, nickel, titanium, calcined carbon and aluminum. The positive electrode current collector may also include stainless steel with a surface treated with carbon, nickel, titanium, silver, or the like. The surface of the positive electrode current collector may include a micro-irregular structure to increase adhesion of the active material. The positive electrode current collector may have the shape of a film, sheet, foil, net, porous, foam, nonwoven, or the like.

A positive electrode active material is a substance that can cause an electrochemical reaction. The positive electrode active material may be a lithium transition metal oxide. The positive electrode active material may be, for example, a layered compound such as lithium cobalt oxide (LiCoO₂) and lithium nickel oxide (LiNiO₂) substituted with one or more transition metals; a lithium manganese oxide substituted with one or more transition metals; a lithium nickel oxide represented by the formula LiNi_{1-y}M_{y}O₂ (where M is any one of Co, Mn, Al, Cu, Fe, Mg, B, Cr, Zn, and Ga, and 0.01≤y≤0.7); a lithium nickel cobalt manganese complex oxide represented by the formula Li_{1+z}Ni_{b}Mn_{c}Co_{1-(b+c+d)}M_{d}O₍₂₋ₑ₎Aₑ, such as Li_{1+z}Ni_{1/3}Co_{1/3}Mn_{1/3}O₂, Li_{1+2N}i_{0.4}Mn_{0.4}Co_{0.2}O₂ (where, -0.5≤z≤0.5, 0.1≤b≤0.8, 0.1≤c≤0.8, 0≤d≤0.2, 0≤e≤0.2, b+c+d<1, M is any one of Al, Mg, Cr, Ti, Si, and Y, and A is any one of F, P, and Cl); an olivine-based lithium metal phosphate represented by the formula Li₁₊ₓM_{1-y}M'_{y}PO_{4-z}X_{z} (where M is a transition metal, more specifically any one of Fe, Mn, Co and Ni, M' is any one of Al, Mg and Ti, X is any one of F, S and N, -0.5≤x≤+0.5, 0≤y≤0.5, and 0≤z≤0.1).

The positive electrode coating part 111C and the positive electrode tab 111T may be separated in the X direction, i.e., the positive electrode active material layer may not cover the X-directional end of the positive electrode current collector, and the positive electrode tab 111T may be connected to the X-directional end of the positive electrode coating part 111C.

According to exemplary embodiments, the notching process may not be performed on the positive electrode 111. Accordingly, the width in the Y direction of the positive electrode coating part 111C may be substantially the same as the width in the Y direction of the positive electrode tab 111T.

In this case, the X direction and the Y direction are two directions that are substantially parallel to the positive and negative current collectors, and the X direction and the Y direction may be substantially perpendicular to each other. The Z direction may be substantially perpendicular to each of the X direction and the Y direction.

The negative electrode 113 may include a negative electrode coating part 113C and a negative electrode tab 113T. The negative electrode tab 113T may be connected to the negative electrode coating part 113C. The negative electrode 113 may include a negative electrode current collector and a negative electrode active material layer including a negative electrode active material. The negative electrode active material layer may be partially applied to the negative electrode current collector. The negative electrode tab 113T may be a portion of the negative electrode current collector that is exposed and not covered by the negative electrode active material layer. The negative electrode coating part 113C is a portion of the negative electrode 113 that includes the negative electrode current collector and the negative electrode active material layer coated on the negative electrode current collector.

The thickness of the negative electrode current collector may be in the range of about 3*µ*m to about 500*µ*m. The negative electrode current collector may not cause chemical changes in the final manufactured secondary battery and may have a high conductivity. The negative electrode current collector may include copper, stainless steel, aluminum, nickel, titanium, calcined carbon, and aluminum-cadmium alloys. The negative electrode current collector can also include stainless steel with a surface treated with carbon, nickel, titanium, silver, or the like. The surface of the negative electrode current collector may include a micro-irregular structure to increase adhesion of the active material. The negative electrode current collector can have the shape of a film, sheet, foil, net, porous, foam, nonwoven, or the like.

The negative electrode active material may include carbon, e.g., anthracite, graphitized carbon, graphitized carbon, etc. The negative electrode active material may include a metal complex oxide, such as, for example, LiₓFe₂O₃(0≤x≤1), LixWO₂(0≤x≤1), SnₓMe₁₋ₓMe'_{y}O_{z} (where Me is any one of Mn, Fe, Pb, and Ge, and Me' is any one of Al, B, P, Si, periodic 1, 2, 3 elements, and halogens; 0<x≤1; 1≤y≤3; and 1≤z≤8). The negative electrode active material may include, for example, a lithium metal; a lithium alloy; a silicon-based alloy; a tin-based alloy. The negative electrode active material may include a metal oxide, e.g., SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, etc. The negative electrode active material may include, for example, a conductive polymer such as polyacetylene; a Li-Co-Ni based material; or the like.

The negative electrode coating part 113C and the negative electrode tab 113T may be separated in the X direction, i.e., the negative electrode active material layer may not cover the X-directional end of the negative electrode current collector, and the negative electrode tab 113T may be connected to the X-directional end of the negative electrode coating part 113C. The negative electrode tab 113T may be spaced apart in the X direction from the positive electrode tab 111T.

According to exemplary embodiments, the notching process may not be performed on the negative electrode 113. Accordingly, the width in the Y direction of the negative electrode coating part 113C may be substantially the same as the width in the Y direction of the negative electrode tab 113T.

The separator 115 may include an insulating material. The separator 115 may be interposed between the positive electrode 111 and the negative electrode 113. The area of the separator 115 may be larger than the area of the positive electrode coating part 111C, and the area of the separator 115 may be larger than the area of the negative electrode coating part 113C, whereby the separator 115 may prevent unwanted short circuits between the positive electrode 111 and the negative electrode 113.

According to exemplary embodiments, the separator 115 may include any one of polypropylene and polyethylene. According to exemplary embodiments, the separator 115 may be a porous film, thereby preventing shorting of the positive electrode 111 and negative electrode 113 while providing a path for migration of lithium ions between them.

According to exemplary embodiments, the positive electrode tab 111T and negative electrode tab 113T of the stack cell 110 may be at opposite ends of the stack cell 110. According to exemplary embodiments, the positive electrode tab 111T and negative electrode tab 113T of the stack cell 110 may be spaced apart in the X direction.

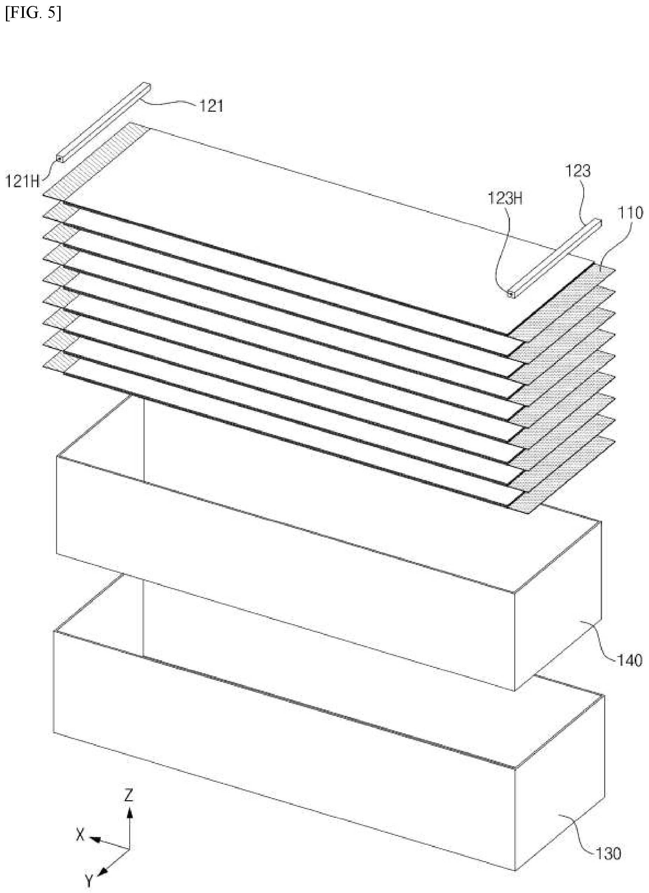

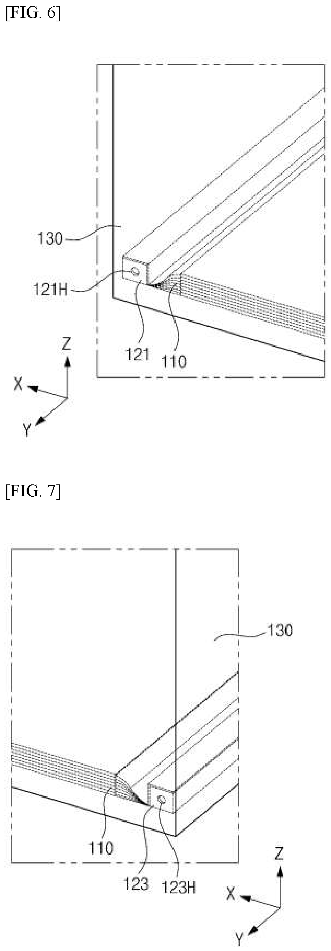

FIGS. 5 through 7 show the stacking of stack-collector modules.

Next, referring to FIGS. 1, 2, and FIGS. 5 through 7, at P120, a stack-collector module may be stacked in a first case 130. The stack-collector module may include stack cells 110, a first tab collector 121, and a second tab collector 123. Stacking the stack-collector module into the first case 130 may include, at P121, disposing the stack cells 110, the first tab collector 121, and the second tab collector 123 in the first case, at P123, fixing the first tab collector 121 and the second tab collector 123 to the first case 130, and at P125, injecting the electrolyte.

At P121, the stack cells 110, the first tab collector 121, and the second tab collector 123 may be disposed within the first case 130. According to exemplary embodiments, the first case 130 may include metal. The first case 130 may be a prismatic metal can, but this is for illustrative purposes only and does not in any way limit the technical ideas of the present disclosure. Based on what is described herein, one of ordinary skill in the art will readily arrive at embodiments where the case for the battery cells includes any of a cylindrical can and an aluminum pouch.

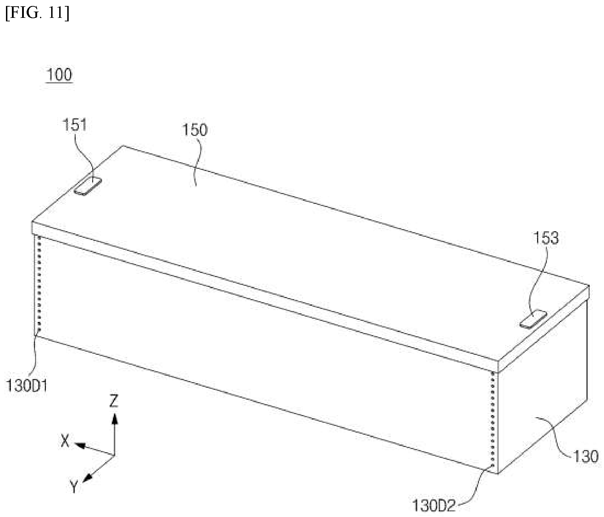

A set number of stack cells 110, one first tab collector 121, and one second tab collector 123 may be units of repeated stacking to form a stack-collector module that is repeatedly provided to provide a finished battery cell (100, see FIG. 11).

The first case 130 may include a base plate and side walls connected to the base plate. The base plate may be substantially perpendicular to the Z direction. The side walls may be substantially perpendicular to the base plate.

An insulating case 140 may be provided within the first case 130. The insulating case 140 may include an insulating material. The insulating case 140 may be interposed between the first case 130 and the stack cells 110, whereby the insulating case 140 may prevent unwanted short circuits between the stack cells 110 and the first case 130.

The stack cells 110 can be stacked in the Z direction. In this example, the stack cells 110 may be connected in parallel. Accordingly, the positive electrode tab 111T of each of the stack cells 110 may overlap in the Z direction, and the negative electrode tab 111T of each of the stack cells 110 may overlap in the Z0 direction. The positive electrode tabs 111T of each of the stack cells 110 may be shorted to each other, and the negative electrode tabs 111T of each of the stack cells 110 may be shorted to each other.

According to exemplary embodiments, the first tab collector 121 may be overlapped in the Z direction with the positive electrode tab 111T of each of the stack cells 110. According to exemplary embodiments, the first tab collector 121 may be shorted to the positive electrode tab 111T of each of the stack cells 110. According to exemplary embodiments, the first tab collector 121 may pressurize the positive electrode tab 111T of each of the stack cells 110, thereby ensuring a reliable electrical connection between the positive electrode tabs 111T of the stack cells 110. According to exemplary embodiments, the first tab collector 121 may contact the positive electrode tabs 111 T of the uppermost stack cell 110.

According to exemplary embodiments, the first tab collector 121 may extend in the Y direction. According to exemplary embodiments, the first tab collector 121 may have a rod shape. According to exemplary embodiments, the first tab collector 121 may have first fastening holes 121H at each of the Y ends of the first tab collector 121. More specifically, according to exemplary embodiments, the first tab collector 121 may include surfaces substantially perpendicular to the Y direction on each of the Y ends, and the first tab collector 121 may include first fastening holes 121H embedded in the Y direction from the surfaces. The first fastening holes 121H may be used for rivet-free fixation.

According to exemplary embodiments, the second tab collector 123 may be overlapped in the Z direction with the negative electrode tab 113T of each of the stack cells 110. According to exemplary embodiments, the second tab collector 123 may be shorted to the negative electrode tab 113T of each of the stack cells 110. According to exemplary embodiments, the second tab collector 123 may pressurize the negative electrode tab 113T of each of the stack cells 110, thereby ensuring a reliable electrical connection between the negative electrode tabs 113T of the stack cells 110. According to exemplary embodiments, the second tab collector 123 may be in contact with the negative electrode tabs 113T of the uppermost stack cell 110.

According to exemplary embodiments, the second tab collector 123 may extend in the Y direction. According to exemplary embodiments, the second tab collector 123 may have a rod shape. According to exemplary embodiments, each of the Y ends of the second tab collector 123 may have fastening holes 123H. More specifically, according to exemplary embodiments, the second tab collector 123 may include surfaces substantially perpendicular to the Y direction on each of the Y ends, and the second tab collector 123 may include fastening holes 123H embedded in the Y direction from the surfaces. The fastening holes 123H may be used for rivet-free fixation.

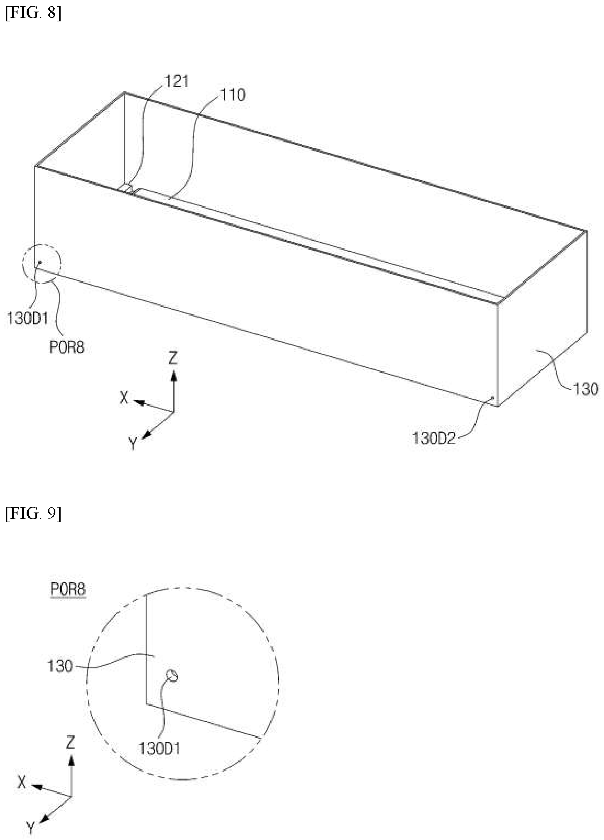

FIG. 8 illustrates the fixation of the first tab collector 121 and second tab collector 123 to the first case 130.

FIG. 9 shows a portion of FIG. 8 (POR8).

Then, referring to FIGS. 2, 8 and 9, at P123, the first tab collector 121 and the second tab collector 123 may be fixed to the first case 130. The first tab collector 121 and the second tab collector 123 may be fixed to the first case 130 by tox-clinching technology of Toxsprestechnik, but this is for illustrative purposes only and does not in any way limit the technical ideas of the present disclosure. The first tab collector 121 and the second tab collector 123 may be fixed to the first case 130 by any technique that permits rivet-free coupling.

By applying a tool to the first case 130 such that a portion of the first case 130 is inserted into the first fastening holes 121H of the first tab collector 121, the first tab collector 121 and the first case 130 may be fixed. During tooling of the first case 130, the first case may undergo phases of compression, contouring, lateral expansion, and the like. Accordingly, the first case 130 and the insulating case 140 may be deformed to fill the first fastening holes 121H, and the first case 130 and the first tab collector 121 may be fixed to each other.

By tooling the first case 130 such that a portion of the first case 130 is inserted into the second fastening holes 123H of the second tab collector 123, the second tab collector 123 and the first case 130 may be fixed. During tooling of the first case 130, the first case may undergo compression, contouring, lateral expansion, and the like. Accordingly, the first case 130 and the insulating case 140 may be deformed to fill the second fastening holes 123H, and the first case 130 and the second tab collector 123 may be fixed to each other.

First and second dents 130D1, 130D2 may be formed in the first case 130 by the above-described deformation. The first dent 130D1 may overlap the first tab collector 121 in the Y direction. The first dent 130D1 may be a deformation of the first case 130 that fills the first fastening holes 121H of the first tab collector 121. The first dent 130D1 may fix the first tab collector 121.

The second dent 130D2 may overlap the second tab collector 123 in the Y direction. The second dent 130D2 may be a deformation of the first case 130 that fills the second fastening holes 123H of the second tab collector 123. The second dent 130D2 may fix the second tab collector 123.

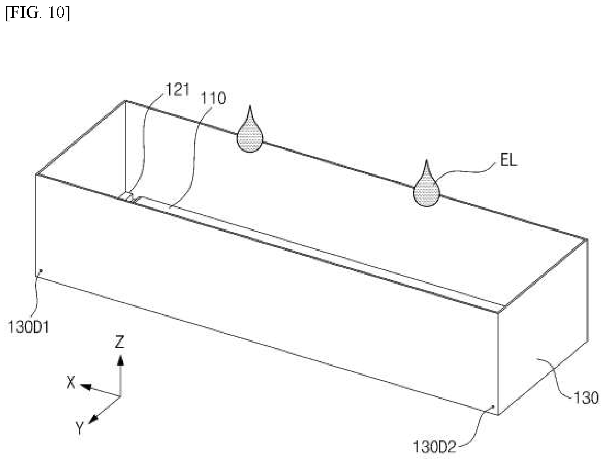

FIG. 10 shows the electrolyte (EL) injection process.

Then, referring to FIGS. 2 and 10, at P125, an electrolyte (EL) may be injected into the first case 130. According to exemplary embodiments, even when a large number of stack cells 110 are stacked within the first case 130, by injecting the electrolyte in portions based on the stacking of a plurality of cell-collector modules, the electrolyte can be efficiently absorbed by each of the stack cells 110, thereby providing reliability of the resulting battery cell 100 (see FIG. 11).

P125 and P123 may also be performed in the reverse order. For example, at P125, the electrolyte (EL) may be injected into the first case 130 first, and then at P123, the first tab collector 121 and the second tab collector 123 may be fixed to the first case 130.

FIG. 11 is a perspective view of the battery cell 100.

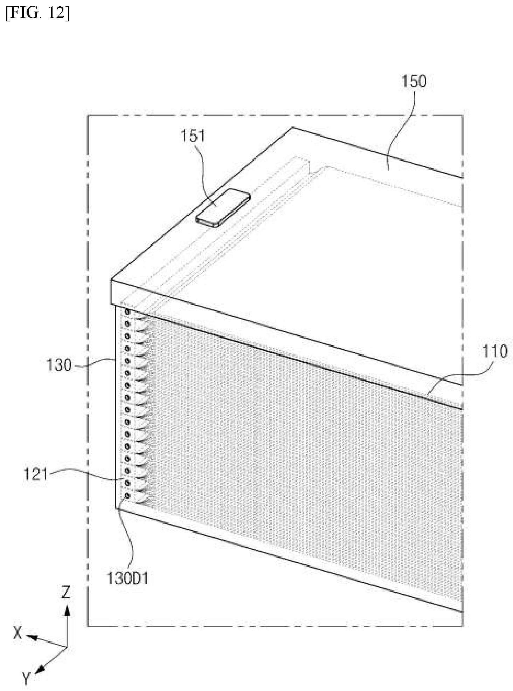

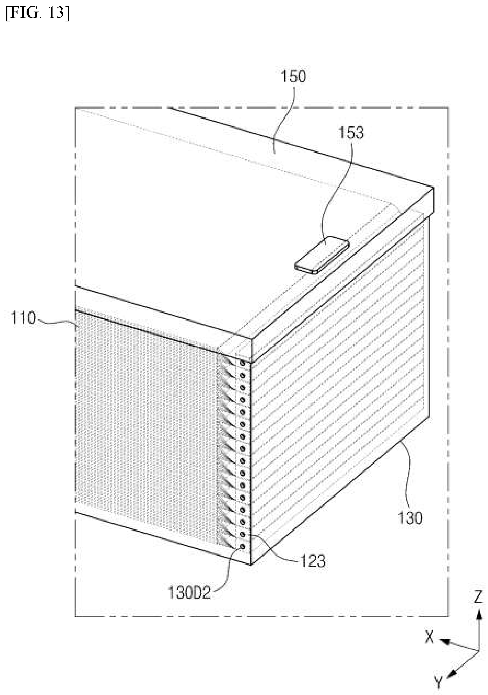

FIGS. 12 and 13 are partial perspective views of the battery cell 100.

Referring to FIGS. 1, FIG. 3, FIG. 4, and FIGS. 11 through 13, at P130, if the target number of stacks has not been reached (NO), P120 may be repeatedly performed. Accordingly, a plurality of cell-collector modules may be stacked in the Z direction, as shown in FIGS. 12 and 13.

Accordingly, the first case 130 may include a plurality of first dents 130D1 and a plurality of second dents 130D2. The plurality of first dents 130D1 may be arranged along the Z direction. The plurality of first dents 130D1 may overlap in the Z direction. The plurality of second dents 130D2 may be arranged along the Z direction. The plurality of second dents 130D2 may overlap in the Z direction.

The neighboring first tab collectors 121 may be spaced apart with the positive electrode tabs 111T in between. The neighboring first tab collectors 121 may be electrically connected via the positive electrode tabs 111T.

Neighboring second tab collectors 123 may be spaced apart by negative electrode tabs 113T. The neighboring second tab collectors 123 may be electrically connected via the negative electrode tabs 113T.

Referring to FIGS. 1, 11 through 13, at P130, a second case 150 may be welded to the first case 130 when the target stacking number is reached. The second case 150 may be, for example, but not limited to, a cap of a metal can. According to exemplary embodiments, the second case 150 and the first case 130 may be coupled by any one of ultrasonic welding and laser welding.

The second case 150 may cover the plurality of stack cells 110, the plurality of first tab collectors 121, and the plurality of second tab collectors 123 stacked on the first case 130. The second case 150 may include a positive electrode terminal 151 shorted to the plurality of first tab collectors 121 and a negative electrode terminal 153 shorted to the plurality of second tab collectors 123. The resultant voltage and current of the battery cell 100 may be output via the positive electrode terminal 151 and the negative electrode terminal 153.

Referring now to FIG. 3 and FIGS. 11 through 13, the coupling of the second case 150 and the first case 130 may provide a battery cell 100. The battery cell 100 may include a plurality of stack cells 110, a plurality of first tab collectors 121, a plurality of second tab collectors 123, a first case 130, an insulating case 140, and a second case 150.

The plurality of stack cells 110 may overlap in the Z direction. The plurality of stack cells 110 may be stacked in the Z direction. The positive electrode tab 111T of the positive electrode 111 of each of the plurality of stack cells 110 can be stacked in the Z direction with the plurality of first tab collectors 121. The positive electrode tab 111T of the positive electrode 111 of each of the plurality of stack cells 110 may be shorted with the plurality of first tab collectors 121. A negative electrode tab 113T of the negative electrode 113 of each of the plurality of stack cells 110 may overlap with a plurality of second tab collectors 123 in the Z direction. The negative electrode tab 113T of the negative electrode 113 of each of the plurality of stack cells 110 may be shorted to the plurality of second tab collectors 123.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

## Claims

1. A battery cell comprising:
a first case comprising a base plate;
a plurality of stack cells on the base plate, each of the plurality of stack cells comprising a positive electrode, a negative electrode, and a separator interposed between the positive electrode and the negative electrode;
a plurality of first tab collectors on the base plate; and
a plurality of second tab collectors on the base plate.

2. The battery cell of claim 1, wherein
the first tab collectors are spaced apart from the second tab collectors in a first direction.

3. The battery cell of claim 2, wherein
each of the first tab collectors and each of the second tab collectors extend in a second direction perpendicular to the first direction.

4. The battery cell of claim 3, wherein
each of the first tab collectors comprises first fastening holes.

5. The battery cell of claim 4, wherein
the first fastening holes are at the ends of the second direction.

6. The battery cell of claim 5, wherein
the first case partially fills the first fastening holes.

7. The battery cell of claim 5, wherein
the first case comprises first dents that partially fill the first fastening holes, and
the first dents are arranged along a third direction perpendicular to the first and second directions.

8. The battery cell of claim 7, wherein
the first tab collectors are arranged along the third direction, and
the second tab collectors are arranged along the third direction.

9. The battery cell of claim 6, wherein
each of the second tab collectors comprises second fastening holes, and
the first case partially fills the second fastening holes.

10. The battery cell of claim 1, wherein
the positive electrode of each of the plurality of stack cells comprises a positive electrode coating part and a positive electrode tab connected to the positive electrode coating part, wherein
the negative electrode of each of the plurality of stack cells comprises a negative electrode coating part and a negative electrode tab connected to the negative electrode coating part, and the positive electrode tab of each of the plurality of stack cells is spaced in a first direction from the negative electrode tab of each of the plurality of stack cells.

11. The battery cell of claim 10, wherein
a width of a second direction perpendicular to the first direction of the positive electrode coating part is equal to a width of the second direction of the positive electrode tab.

12. The battery cell of claim 11, wherein
a width in the second direction of the negative electrode coating part is equal to a width in the second direction of the negative electrode tab.

13. The battery cell of claim 1, further comprising:
a second case coupled to the first case, and
the second case comprises a positive electrode terminal shorted with the plurality of first tab collectors and a negative electrode terminal shorted with the plurality of second tab collectors.

14. The battery cell of claim 1, wherein
a positive electrode tab of the positive electrode of each of those corresponding among the plurality of stack cells is interposed between the first tab collectors, and
a negative electrode tab of the negative electrode of each of those corresponding among the plurality of stack cells is interposed between the second tab collectors.

15. A battery cell comprising:
a first case comprising a base plate;
a plurality of stack cells on the base plate, each of the plurality of stack cells comprising a positive electrode, a negative electrode, and a separator interposed between the positive electrode and the negative electrode;
a plurality of first tab collectors on the base plate; and
a plurality of second tab collectors on the base plate, wherein
the positive electrode of each of the plurality of stack cells comprises a positive electrode coating part and a positive electrode tab connected to the positive electrode coating part,
the negative electrode of each of the plurality of stack cells comprises a negative electrode coating part and a negative electrode tab connected to the negative electrode coating part, wherein
the positive electrode tab of each of the plurality of stack cells are spaced apart in a first direction from the negative electrode tab of each of the plurality of stack cells, and
a width of a second direction perpendicular to the first direction of the positive electrode coating part is equal to a width of the second direction of the positive electrode tab.

16. The battery cell of claim 15, wherein
a width in the second direction of the negative electrode coating part is equal to a width in the second direction of the negative electrode tab.
